# EUROPEAN PATENT APPLICATION

(11) **EP 4 761 032 A1**
(43) Date of publication of application: **17.06.2026**
(21) Application number: 24220207.5
(22) Date of filing: 16.12.2024
(51) Int. Cl.: H02J 3/00, C25B 1/04, H02J 3/12, H02J 9/06

(54) **ELECTROLYSIS PLANT WITH ENHANCED FAULT RIDE THROUGH CAPABILITY AND OPERATION METHOD**

(71) Applicant: Siemens Energy Global GmbH & Co. KG, 81739 München (DE)
(72) Inventor: Lukianov, Semen, 91058 Erlangen (DE); Buratckii, Artem, 90459 Nürnberg (DE)

(57) **Abstract**

An electrolysis plant 300 with enhanced fault ride through capability comprises a transformer system 301 comprising an autotransformer 302 having a primary side connectable to an AC power grid 303 via a point of connection 304 and a secondary side with multiple taps 305, a rectifier system 306, and a set of electrolyser modules 307, 308, 309, 310, wherein the rectifier system 306 is connected to receive transformed AC power from the transformer system 301 and to provide DC power to the set of electrolyser modules 307, 308, 309, 310 and wherein an autotransformer secondary side electrical tap connection is selectively established through an on-load tap-changer OLTC 312, and wherein the OLTC 312 is configured to select one of the taps 305 and establish the corresponding electrical tap connection through a power electronic circuit.

## Description

The present disclosure in general relates to the compliance of large-scale loads such as electrolysis plants to grid code requirements when connected to a potentially instable AC power grid. More particularly, the present disclosure relates to an electrolysis plant with enhanced fault ride through (FRT) capability. Further, the present disclosure relates to a method for operating an electrolysis plant with enhanced fault ride through capability.

Connecting entities such as large electrical power generators, e.g., wind parks and photovoltaic systems, and consumers, particularly high-power loads, e.g., large electrolysis plants, to an alternating current (AC) power distribution network, e.g., the public power grid, requires compliance of the entities with the associated grid code requirements. An important grid code requirement, especially for large plants, is their capability of staying connected during short periods of faulty electric network voltage, i.e., their fault ride through (FRT) capability, particularly during voltage dips, i.e., unexpected periods of lower voltage, their low voltage ride through (LVRT) capability. For a load, it is important to return to a pre-fault power consumption of the load in a short period of time after the fault is cleared or even during the fault in order to retain or quickly restore the balance between generated and consumed power in the network. The power plants producing power are requested to resume the pre-fault power generation within a very short time, e.g., 1 second after the fault is cleared. Therefore, only a certain power is allowed to trip and it is essential for large power consumers to remain connected in case of a voltage dip and resume the pre-fault consumption levels within a specified time.

In a realistic example, the requirement for an electrolysis plant is to remain fully connected to the AC power grid in case of a temporary voltage dip at its point of connection (POC) with unchanged pre-fault power consumption within 1 second after the voltage recovers to a defined level, e.g., 0.85 p.u. or 0.9 p.u. (per-unit; expression of a system quantity as fraction of a defined base unit quantity - here: 1 p.u. corresponds to the voltage level prior to the beginning of the dip). Some grid operators may even require the plant to consume active power during the voltage dip identical to the value that has been consumed before the voltage dip.

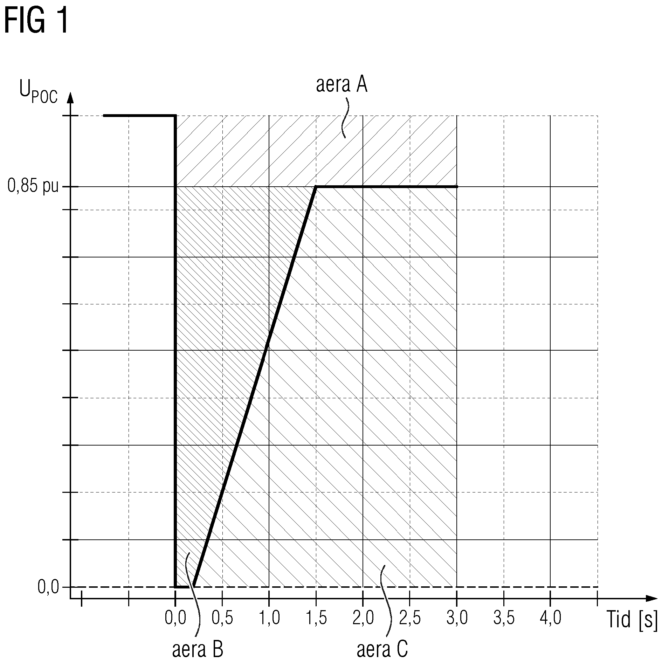

The FRT requirement may, for example, be defined using an FRT capability curve, such as the example curve shown in Fig. 1, wherein a curve is specified, e.g., by a grid operator, where the voltage dip is time dependently shown, during which a load such as an electrolysis plant must remain connected to the grid, see Fig.1, areas A and B, while, according to the grid code, only longer or deeper voltage dips allow a disconnection of the plant, see Fig. 1, area C. In order to comply with such severe FRT requirements, the plant must be able to react very quickly, e.g., during less than 1 second, for example 0.5 seconds, for active power recovery after the fault, i.e., the voltage dip, and tens of milliseconds for active power consumption during the voltage dip.

In Germany the grid code compliant expected recovery time for AC power grids is below 1 second, after the fault is cleared and the voltage has recovered to its regular band, e. g., 0.85 p.u. in the example diagram of Fig. 1. Therefore, depending on the grid code, a fast power intake is required, which must be close to the power consumed before the fault.

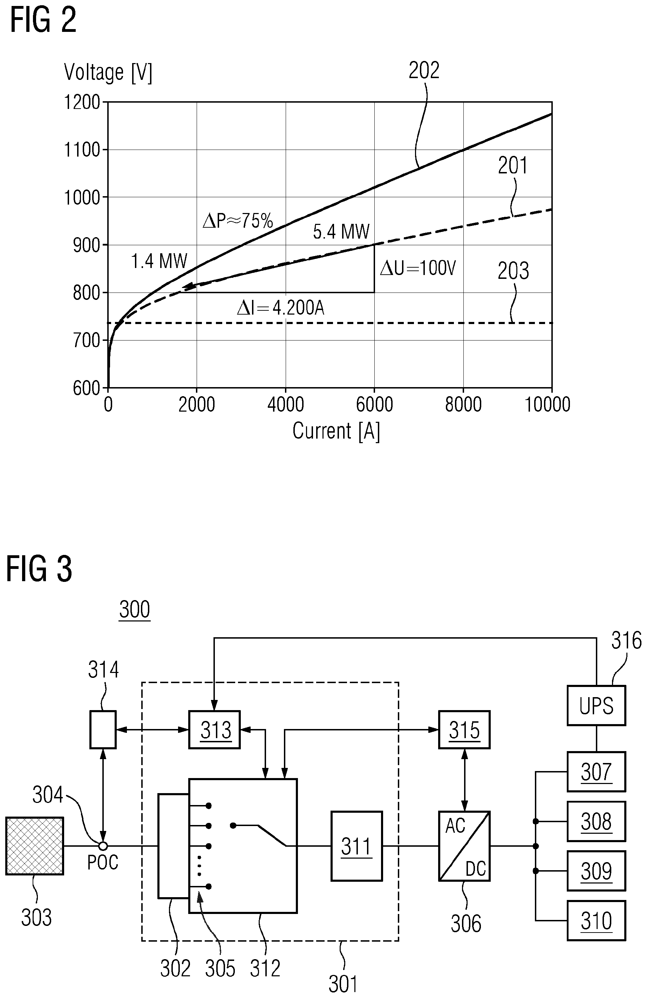

However, since for electrolysis plants the voltage-current (V-I) characteristic of an electrolyser is highly dependent on the input voltage, the pre-fault operational current can only be consumed if the input voltage remains in the same range. Should the voltage dip and recover only up to 85% or 90%, the electrolysis may not reach full load because a dynamic step-up of voltage provided to the electrolyser may typically not be available. An example V-I characteristic of an electrolyser and the impact of a voltage dip on the active power is shown in Fig. 2.

An electrolysis plant connected to receive power from an AC power grid (or other AC power supply) is or comprises a transformer system for transforming the high or medium voltage received from the AC power supply to a lower AC voltage which is then provided to a rectifier system, i.e., an AC/DC converter system, that provides DC power to a set of, i.e., one or more, electrolysers, i.e., electrolyser modules, for carrying out the electrolysis process. The rectifier system can be a power electronic based rectifier system, particularly a thyristor-based rectifier system. Further, the transformer system may be or comprise an autotransformer with multiple taps and an On-Load Tap-Changer (OLTC) for selectively changing the tap connections during operation. The main functionality of the OLTC is to keep the power factor of the system and the firing angle of thyristor-based rectifiers in normal operation range, to compensate for voltage faults at the input of the electrolysis plant. Further, the OLTC may change tap positions to compensate increased demand in DC voltage for the electrolyser modules, which each may be or comprise one or more electrolyser stacks, wherein the increasing demand over time is caused by an "ageing effect" of the modules, as illustrated in Fig. 2, begin-of-life (BOL) and end-of-life (EOL) curves.

An autotransformer is an electrical transformer with only one winding, where portions of the winding act as the primary side, i.e., the primary winding side, and the secondary side, i.e., the secondary winding side, of the transformer. Multiple taps on the secondary side allow to change the secondary side output voltage range. A conventional OLTC may be configured to mechanically change tap connections of the autotransformer, and an operation time of such an OLTC, i.e., the time required for switching the autotransformer from one tap position to a different, neighbouring tap position, can be in the range of, e.g., 2.7 to 5 seconds, which is sufficient for processes with low dynamics, e.g. ramp-up or ramp-down of the electrolyser load, or for compensation of voltage fluctuations in the supply network, i.e., the AC power grid, during a steady state, e.g., ±5% voltage changes at the point of connection (POC) of the electrolysis plant.

However, an operation time of several seconds is not sufficient for fast reaction on the system disturbances and for provision of required dynamics. In particular, grid code requirements of less than 1 second for restoring the power consumption level after a voltage dip cannot be met by merely shifting the output voltage range of the transformer system by changing the tap connection of an autotransformer using a conventional OLTC.

To compensate voltage dips of more than ±10% in the power supply system, i.e., the power grid, and to be able to respond in a milliseconds range, a static synchronous compensator (STATCOM) can be used, e.g., together with DC supercapacitors. This equipment comprises IGBT-based converters, which can react very fast (in milliseconds range), while the DC supercapacitors can be used to store energy and release it when necessary to restore the voltage in the supply system. However, such equipment can be very expensive and does not provide a cost-optimal solution as the indicated function might be used very seldom by the plant.

It is an objective of the present invention to improve an electrolysis plant with a cost-effective solution for grid-code compatible fault ride-through capability.

This objective is solved by an electrolysis plant with enhanced fault ride through capability as stated in claim 1 and a method for operating an electrolysis plant with enhanced fault ride through capability as stated in claim 8. Advantageous additional embodiments of the invention are disclosed in the respective dependent claims.

According to a first aspect of the invention, an electrolysis plant with enhanced fault ride through capability comprises a transformer system comprising an autotransformer having a primary side connectable or connected to an AC power grid, i.e., an AC power network or other AC power supply, via a point of connection (POC) and a secondary side with multiple taps, a rectifier system, and a set of, i.e., one or more, electrolyser modules. The rectifier system is connected to receive transformed AC power from the transformer system and to provide DC power to the set of electrolyser modules and an autotransformer secondary side electrical tap connection is selectively established through an on-load tap-changer OLTC, wherein the OLTC is configured to select one of the taps and establish the corresponding electrical tap connection through a power electronic circuit.

The transformer system consists at least of the autotransformer. However, in an embodiment, the transformer system additionally comprises at least a rectifier transformer having a primary side connected to the secondary side of the autotransformer and a secondary side connected to an input of the rectifier system. In contrast to the autotransformer, the rectifier transformer may have separate primary and secondary windings, i.e., not connected by an electrically conductive path.

The OLTC is a power electronic based OLTC. The OLTC establishes the electrical tap connection through a power electronic circuit of the OLTC, i.e., the power electronic circuit, which comprises one or more power electronic devices, is part of the electrical power transmission path (and is not merely switching a mechanical device through which the electrical power transmission path is established).

A power electronic device is a power semiconductor device, in particular a switchable power semiconductor device, such as a power MOSFET (metal-oxide semiconductor field-effect transistor), a thyristor, or an IGBT (insulated-gate bipolar transistor).

The use of a power electronic based OLTC for establishing autotransformer tap connections of the transformer system of an electrolysis plant allows to significantly reduce operation time, for example to 40 milliseconds or less, e.g., 20 milliseconds, instead of several seconds, e.g., 2.7 seconds or more. This allows to provide the OLTC with the necessary fast dynamic to let the electrolysis plant comply with FRT requirements of a grid code of the connected AC power grid.

In an embodiment of the electrolysis plant, the OLTC is configured to directly switch from the currently selected tap to any other of the multiple taps to change the corresponding electrical tap connection. In other words, switching between the taps in power electronic based OLTC is possible while bypassing intermediate taps and without establishing any intermediate connection, instead of switching between the taps in conventional mechanical OLTC which require a strict order step-by-step switching from the current tap to the next adjacent tap without a possibility to bypass any intermediate taps, which otherwise further slows down the system when switching to the required tap position.

In an example embodiment, a time duration for switching from the currently selected tab to any other of the multiple taps is less than 0.5 second, preferably less than 0.05 seconds, e.g., 0.02 seconds. With such a short switching time it can be ensured that the expected recovery time for AC power grids of, e.g., 1 second, after the fault is cleared and the voltage has recovered to its regular band, e. g., 0.85 p.u., can be met to ensure grid code compliance.

In an embodiment, the electrolysis plant further comprises a voltage sensor device connected to sense a voltage signal corresponding to the voltage at the point of connection (POC); and an OLTC controller connected to receive the voltage signal and configured to control the OLTC and determine which one of the taps to select and establish the corresponding electrical tap connection depending on a level of the voltage signal. This allows the OLTC to switch the tap position depending on the voltage level of the AC power grid received at the POC. Depending on the embodiment, the voltage sensor device either directly senses the level of the voltage at the POC as the corresponding voltage, or at another point of the transformer system, e.g. the transformed voltage received at the input of the rectifier system, that receives a voltage that corresponds to the voltage at the POC, for example a voltage with a level change over time that corresponds to the level change at the POC, but that still allows to determine the same voltage fault event. In a preferred embodiment, the voltage sensor device, i.e., the voltage measurement system, is directly hard-wired to the OLTC controller.

In an example embodiment, the OLTC controller is configured to determine a change of the level of the voltage sensor signal per unit of time and to determine which one of the taps to select depending on the level of the voltage sensor signal at the time instant the change stops. In other words, the new tap position is determined after the voltage fault at the time instant when the voltage sensor signal reaches a new steady-state operation condition. This allows to determine the most suitable new tap position at the earliest possible time instant.

The same tap selection approach applies to any voltage faults, i.e., voltage drops and voltage peaks. However, in another embodiment the OLTC controller or a rectifier controller is configured to additionally or instead adjust thyristor firing angles of the thyristor-based rectifier system, particularly if the voltage fault is or comprises a voltage peak.

In an embodiment, the OLTC controller comprises additional logic circuitry for ensuring that the OLTC is not triggered to change the tap connection during an ongoing transient process or during small voltage disturbances below a voltage threshold. In other word, the additional logic circuitry is a protection circuitry to ensure that switching between tap connections cannot affect stability of the system.

In an example embodiment of the electrolysis plant, the OLTC controller is backed up by an uninterruptible power supply (UPS). This allows its operation even during significant voltage dips in the AC power grid.

In a further example embodiment, the uninterruptible power supply also backs up at least one of the set of electrolyser modules. Due to strict safety requirements when producing hydrogen, most electrolysers have to be equipped with UPS systems, and therefore, such a UPS can be adapted to additionally fulfil the requirements for backing up the OLTC controller in a cost-effective way.

According to a second aspect of the invention, a method for operating an electrolysis plant with enhanced fault ride through capability according to the first aspect of the invention is provided, wherein the electrolysis plant comprises a transformer system comprising an autotransformer having a primary side connected to an AC power grid via a point of connection and a secondary side with multiple taps, a rectifier system, and a set of electrolyser modules, wherein the rectifier system is connected to receive transformed AC power from the transformer system and to provide DC power to the set of electrolyser modules. The method comprises at least selecting one of the taps and selectively establishing a corresponding autotransformer secondary side electrical tap connection through a power electronic circuit of an on-load tap-changer OLTC. This implements the advantages and characteristics of the electrolysis plant by a method for operating such a plant.

In an embodiment, the method further comprises the steps of sensing, using a voltage sensor device, a voltage signal corresponding to the voltage at the point of connection, receiving, by an OLTC controller connected to the voltage sensor device and configured to control the OLTC, the voltage signal, determining which one of the taps to select depending on a level of the voltage signal, and switching to the selected tap and establishing the corresponding electrical tap connection. At least for carrying out the step of determining which one of the taps to select depending on a level of the voltage signal, the OLTC controller in one embodiment comprises a processor device, wherein in another embodiment the OLTC controller comprises logic circuitry such as comparator logic blocks for carrying out, for example, the determination which one of the taps to select. Such additional comparator logic blocks can, e.g., be used to compare the measured voltage level at the POC and, with knowledge of the voltage table design of the OLTC, it is possible to determine how many taps are needed to compensate the voltage fault, e.g., voltage drop.

In an example embodiment, the method further comprises the steps of determining, by the OLTC controller, a change of the level of the voltage sensor signal per unit of time, determining the time instant at which the change stops, and determining the level of the voltage sensor signal at the time instant, wherein the step of determining which one of the taps to select is carried out depending on said level of the voltage sensor signal. The step of determining a change of the level of the voltage sensor signal per unit of time refers to a determination of dU/dt. In an example embodiment, the voltage fault, e.g., a voltage dip, is detected by the voltage sensor device delivering voltage levels at a high sampling rate (in the millisecond range). The step of determining the time instant at which the change stops corresponds to detecting a new steady state operation condition. In an embodiment, the time instant at which the change stops is the time instant at which dU/dt is determined to be lower than a specified limit.

In an example embodiment of the method, the step of switching to the selected tap comprises switching directly to the selected tap. In other words, switching between the taps in power electronic based OLTC is possible while bypassing intermediate taps and without establishing any intermediate connection.

While not explicitly described, the presented embodiments may be employed in any combination or sub-combination.

The properties, features and advantages of the invention described above, and the manner in which they are achieved, will become clearer and more clearly understood in connection with the following description of the exemplary embodiments, which are explained in more detail in connection with the drawings, wherein
- Fig. 1: schematically illustrates an example of a fault ride through capability curve for defining an FRT grid code requirement;
- Fig. 2: schematically illustrates an example of a voltage-current characteristic of an electrolyser;
- Fig. 3: schematically illustrates an example of an electrolysis plant with enhanced FRT capability according to an embodiment of the invention;
- Fig. 4: schematically illustrates an example of a method for operating an electrolysis plant with enhanced FRT capability according to another embodiment of the invention; and
- Fig. 5: shows an example illustration of a comparison of operational characteristics of a conventional OLTC and a power electronic based OLTC.

It is to be understood that other embodiments may be used and structural or logical changes may be made without departing from the scope of the present invention. It is to be understood that the features of the various exemplary embodiments described above and below may be combined with each other unless specifically stated otherwise. The description is therefore not to be taken in a limiting sense, and the scope of the present invention is defined by the appended claims.

Referring again to Fig. 1, an example of a fault ride through capability curve for defining an FRT grid code requirement is schematically shown. The FRT capability curve defines that the entity connected to the AC power supply grid via a POC has to stay connected to the AC power grid as long as the level of the voltage U_{POC} received at the POC does not fall below the threshold defined by the shown curve during and after a voltage dip starting at T_{id} = 0 seconds. In the shown example, U_{POC} has to recover to at least 0.85 p.u. of U_{POC} prior to the beginning of the voltage drop. The electrolysis plant as the entity connected to the AC power grid has to comply to this requirement in order to be grid code compliant. In other words, the electrolysis plant must be configured to stay connected to the AC power grid for each (U_{POC}, T_{id}) within area A and area B, while, according to the grid code, only longer or deeper voltage dips allow a disconnection of the plant, as defined by area C.

Referring again to Fig. 2, an example of a voltage-current characteristic of an electrolyser is schematically shown. It can be seen that the voltage-current characteristic of an electrolyser of an electrolysis plant changes over time from begin-of-life (BOL) 201 to end-of-life (EOL) 202 of the electrolyser. Hydrogen production in the electrolyser is only possible above a corresponding voltage threshold 203. It can be seen that for electrolysis plants the voltage-current (V-I) characteristic of an electrolyser is highly dependent on the input voltage, and that any operational current provided to the electrolyser can only be consumed if the input voltage remains in the same range. But, as shown in Fig. 2, should the input voltage after a voltage dip, i.e., a voltage drop, not fully recover to the pre-fault value, but recover only up to 85% - 90%, the electrolysis cannot reach full load because a dynamic step-up of voltage by the electrolysis power supply is typically not available. As an example shown in Fig. 2, a remaining voltage difference to the pre-fault voltage level of 100 V will result in the electrolyser consuming 4200 A of input current less, i.e. a reduction of 75% of consumed power. It is therefore preferred to increase the voltage after a voltage dip as fast as possible and not only to 0.85 p.u. or 0.9 p.u. but to the pre-fault level.

Referring now to Fig. 3, an example of an electrolysis plant 300 with enhanced FRT capability according to an embodiment of the invention is schematically shown. The electrolysis plant 300 comprises a transformer system 301 with an autotransformer 302. The autotransformer 302 has a primary side connected to an AC power grid 303 via a point of connection (POC) 304 and a secondary side with multiple, i.e., a plurality of taps 305. The electrolysis plant 300 further contains a rectifier system 306, i.e., an AC to DC converter system, and a set of electrolyser modules 307, 308, 309, 310. The rectifier system 306 may for example be a thyristor-based rectifier system and is connected to receive transformed AC power from the transformer system 301 and to provide DC power to the set of electrolyser modules 307, 308, 309, 310. In the shown embodiment the transformer system 301 further contains a rectifier transformer 311 having a primary side connected to the secondary side of the autotransformer 302 and a secondary side connected to an input of the rectifier system 306. And the transformer system 301 contains an on-load tap-changer (OLTC) 312 between the autotransformer 302 and the rectifier transformer 311, configured to connect a selected one of the multiple taps 305 of the autotransformer 302 to the primary side of the rectifier transformer and establish an autotransformer secondary side electrical tap connection through the on-load tap-changer (OLTC) 312, wherein the OLTC 312 is configured to select one of the multiple taps 305 and establish the corresponding electrical tap connection through a power electronic circuit, e.g. comprising one or more power semiconductor switches. The OLTC 312 is configured to directly switch from the currently selected tap to any other of the multiple taps 305 to change the corresponding electrical tap connection, wherein a time duration for switching from the currently selected tab to any other of the multiple taps 305 is less than 0.5 seconds. Preferably, it is less than 50 milliseconds, e.g., 40 milliseconds or less, such as 20 milliseconds, and the OLTC 312 is able to provide the necessary fast dynamic to put the electrolysis plant 300 in compliance with FRT requirements. Such an OLTC 312 can be applied to any transformer system, e.g., dry and oil-immersed. The main functionality of the OLTC 312 is to keep the power factor of the system and the firing angle of the thyristor-based rectifier system 306 in normal operation range, to compensate for the voltage drop on the POC 304, and to compensate the increased demand in DC voltage for the electrolyser stacks of the electrolyser modules 307, 308, 309, 310 caused by the "ageing effect", when they are reaching End-of-Life, as shown in Fig. 2.

The OLTC 312 is controlled by an OLTC controller 313. A voltage sensor device 314 is connected to sense a voltage signal corresponding to the voltage at the POC 304. The OLTC controller 313 is connected to receive the voltage signal and configured to control the OLTC 312 and determine which one of the multiple taps 305 to select and establish the corresponding electrical tap connection depending on a level of the voltage signal. In the shown embodiment, the OLTC 312 is further connected to a plant controller or rectifier controller 315 connected to control the firing angles of the thyristor-based rectifier system 306 and to adjust the selected tap position of the OLTC depending on the operation range of the firing angles of the thyristors of the rectifier system 306. However, in other embodiments the functionality of the OLTC controller 313 and the rectifier controller 315 may be provided, e.g., together in a single controller. The OLTC controller 313 is configured to determine a change of the level of the voltage sensor signal per unit of time and to determine which one of the taps to select depending on the level of the voltage sensor signal at the time instant the change stops, i.e., at the time instant when the voltage sensor signal reaches a new steady-state operation condition.

Further, in the shown embodiment, the OLTC controller 313 is backed up by an uninterruptible power supply (UPS) 316, which is also the UPS of the set of electrolyser modules 307, 308, 309, 310.

Additionally, in another embodiment a measurement system for voltage fault detection comprises a transient recorder (not shown) connected to or comprised in the voltage sensor device 314 or the OLTC controller 313 for further analysis of fault events and improvement of the voltage change detection and evaluation.

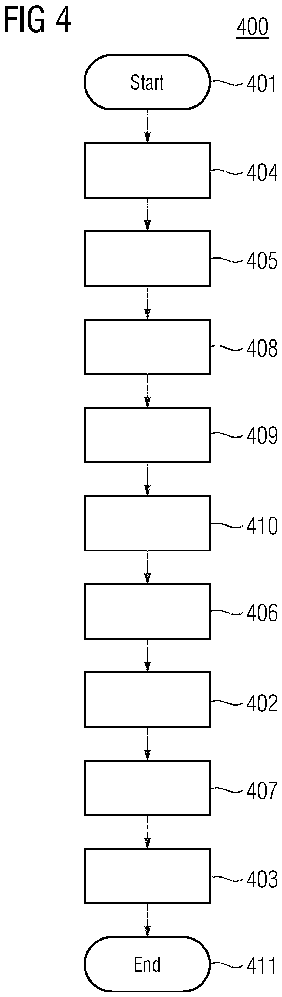

Referring now to Fig. 4, an example of a method 400 for operating an electrolysis plant with enhanced FRT capability according to another embodiment of the invention is schematically illustrated, wherein the electrolysis plant comprises a transformer system with an autotransformer having a primary side connected to an AC power grid via a point of connection and a secondary side with multiple taps, a rectifier system, and a set of electrolyser modules, and wherein the rectifier system is connected to receive transformed AC power from the transformer system and to provide DC power to the set of electrolyser modules. The method begins at start 401 and comprises the steps of selecting 402 one of the taps and selectively establishing 403 a corresponding autotransformer secondary side electrical tap connection through a power electronic circuit of an on-load tap-changer OLTC.

In the shown embodiment, the method 400 further comprises before the step of selecting 402 one of the taps, steps of sensing 404, using a voltage sensor device, a voltage signal corresponding to the voltage at the point of connection, receiving 405, by an OLTC controller connected to the voltage sensor device and configured to control the OLTC, the voltage signal, and determining 406 which one of the taps to select depending on a level of the voltage signal. This can be carried out, e.g., using additional comparator logic, by comparing the level of the voltage signal with a design voltage table of the OLTC.

After the step of selecting 402 one of the taps, the method then comprises switching 407 directly to the selected tap before establishing 403 the corresponding electrical tap connection. Further, in the shown embodiment the method 400 comprises before the step of determining 406 which one of the taps to select steps of determining 408, by the OLTC controller, a change of the level of the voltage sensor signal per unit of time, determining 409 a time instant at which the change stops, i.e., determining the end of the voltage fault and the begin of a new steady-state operation condition, by calculating dU/dt. If dU/dt becomes lower than a specified limit, the change is considered to have stopped and the level of the voltage sensor signal at said time instant is determined 410. The step of determining 406 which one of the taps to select is then carried out depending on the determined level of the voltage sensor signal.

The method ends 411, e.g., when the electrolysis plant is shut down or disconnected from the AC power grid.

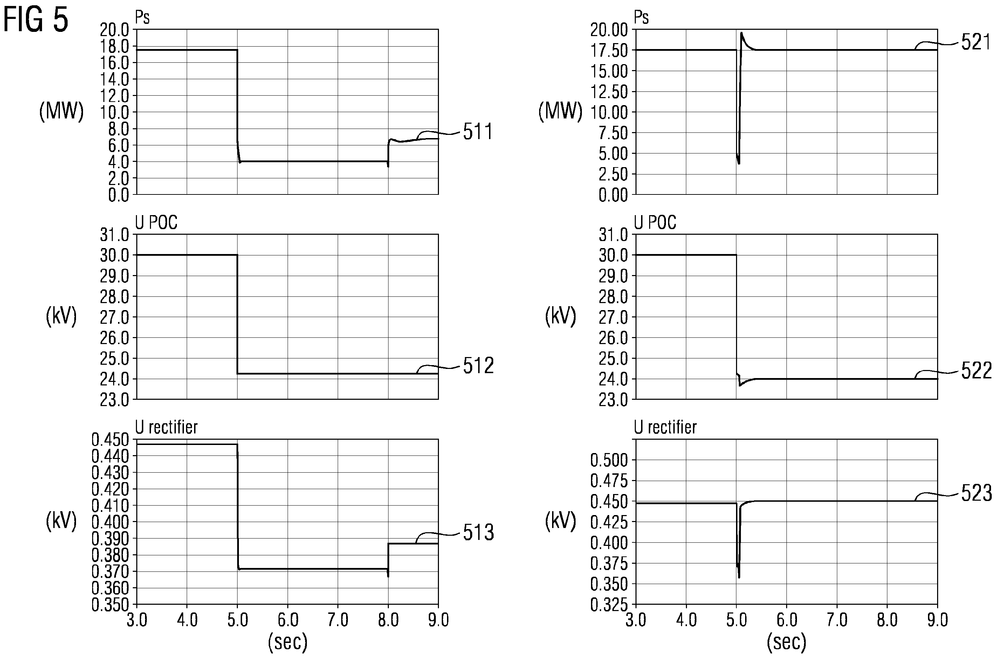

Referring to Fig. 5, an example illustration of a comparison of operational characteristics of a conventional OLTC and a power electronic based OLTC is shown. Curves 511, 512 and 513 illustrate the power Pₛ, the voltage level at the POC U_{POC} and the voltage level at the input of the rectifier system U_{rectifier}, respectively, of an electrolysis plant using a conventional OLTC without power electronic circuits. Curves 521, 522 and 523 illustrate the power Pₛ, the voltage level at the POC U_{POC} and the voltage level at the input of the rectifier system U_{rectifier}, respectively, of an electrolysis plant according to the invention, using a power electronic based OLTC.

While the shown voltage dip in curve 512 causes the conventional OLTC having a reaction time of 3 seconds to begin adjusting the tap connection by changing it to the best neighbouring tap position. This allows the voltage at the rectifier system input 513 after 3 seconds to partly recover and increases the power consumption 511. However, it can be seen that levels of power and U_{rectifier} are still far below their pre-fault values and it will require several more 3 second periods for full recovery to the pre-fault value.

In contrast to this, the shown voltage dip in curve 522 causes the power electronic based OLTC having a reaction time of only a few milliseconds, e.g., 40 ms, to adjust the tap connection by changing it directly to the best suitable tap position. This allows the voltage at the rectifier system input 523 after a few milliseconds to fully recover and increases the power consumption 521 to its pre-fault value. Moreover, operation of the tap-changer during the voltage dip, i.e., the undervoltage event, additionally increases the voltage at the input of the rectifier system U_{rectifier} 523 and therefore lets the electrolysis plant recover to pre-fault current consumption even if the voltage at the POC recovered to less than the pre-fault value, e.g., to 0.8-0.9 p.u.

If the voltage at the rectifier system input recovers to 1.0-1.2 p.u. after the voltage dip, the OLTC controller can use the same dU/dt-based function and further adapt the tap-position in order to decrease the voltage on the input of the rectifier system to the pre-fault value.

The operational characteristics shown in Fig. 5 illustrate an operation difference between the conventional OLTC and the power electronic based OLTC during the voltage dip as further described with the following example: The used example autotransformer has 12 taps operated by the OLTC, with a fixed 5% step between the taps. Prior to the voltage fault the OLTC operates using tap position 6. When the voltage level at POC drops up to 0.8 p.u., cf. curve 522, the voltage level at the rectifier terminals also drops down to 0.8 p.u., cf. curve 523, in comparison with its pre-fault voltage level. The OLTC control detects the fault and then waits for a steady state condition. After the steady state is reached, the OLTC control evaluates the measured voltage level at the POC and determines the actual voltage drop at the POC. Then a command to trigger directly tap position 10 is sent to the OLTC, which is suitable for compensating the voltage drop at the terminals of the rectifier system. This operation principle also allows to restore the active power after clearing of the fault in a very short time range, cf. curve 521.

While conventional OLTCs often have 2 or 3 taps for compensation of undervoltage conditions in steady state condition, in an embodiment of the electrolysis plant using a power electronic based OLTC, the number of taps, which could be used for compensation of the voltage dip, is increased to increase capability and flexibility of the system.

Those skilled in the art will recognize that some boundaries between blocks in Fig. 3 and Fig. 4 are merely illustrative and that alternative embodiments may merge blocks or impose an alternative composition of functionality upon various blocks. It should be noted that, depending on the embodiment, method steps, although described and illustrated according to certain sequence or order of steps, may at least partly be carried out in a different order or simultaneously. Other steps may be added and certain steps described here may be left out.

Although the invention has been illustrated and described in detail by the shown preferred embodiments, the invention is not limited by the disclosed examples and other variations can be derived therefrom by those skilled in the art without departing from the scope of the invention.

In summary, an electrolysis plant 300 with enhanced fault ride through capability is presented that comprises a transformer system 301 comprising an autotransformer 302 having a primary side connectable to an AC power grid 303 via a point of connection 304 and a secondary side with multiple taps 305, a rectifier system 306, and a set of electrolyser modules 307, 308, 309, 310, wherein the rectifier system 306 is connected to receive transformed AC power from the transformer system 301 and to provide DC power to the set of electrolyser modules 307, 308, 309, 310 and wherein an autotransformer secondary side electrical tap connection is selectively established through an on-load tap-changer OLTC 312, and wherein the OLTC 312 is configured to select one of the taps 305 and establish the corresponding electrical tap connection through a power electronic circuit.

Further, a method 400 for operating an electrolysis plant with enhanced fault ride through capability is provided.

## Claims

1. Electrolysis plant (300) with enhanced fault ride through capability, comprising
a transformer system (301) comprising an autotransformer (302) having a primary side connectable to an AC power grid (303) via a point of connection (304) and a secondary side with multiple taps (305);
a rectifier system (306); and
a set of electrolyser modules (307, 308, 309, 310);
wherein the rectifier system (306) is connected to receive transformed AC power from the transformer system (301) and to provide DC power to the set of electrolyser modules (307, 308, 309, 310) and wherein an autotransformer secondary side electrical tap connection is selectively established through an on-load tap-changer OLTC (312), **characterized in that**
the OLTC (312) is configured to select one of the taps (305) and establish the corresponding electrical tap connection through a power electronic circuit.

2. The electrolysis plant as claimed in claim 1, wherein the OLTC (312) is configured to directly switch from the currently selected tap to any other of the multiple taps (305) to change the corresponding electrical tap connection.

3. The electrolysis plant as claimed in claim 2, wherein a time duration for switching from the currently selected tab to any other of the multiple taps (305) is less than 0.5 seconds.

4. The electrolysis plant as claimed in any of the preceding claims, further comprising
a voltage sensor device (314) connected to sense a voltage signal corresponding to the voltage at the point of connection (304); and
an OLTC controller (313) connected to receive the voltage signal and configured to control the OLTC (312) and determine which one of the taps (305) to select and establish the corresponding electrical tap connection depending on a level of the voltage signal.

5. The electrolysis plant as claimed in claim 4, wherein the OLTC controller (313) is configured to determine a change of the level of the voltage sensor signal per unit of time and to determine which one of the taps (305) to select depending on the level of the voltage sensor signal at the time instant the change stops.

6. The electrolysis plant as claimed in claim 4 or claim 5, wherein the OLTC controller (313) is backed up by an uninterruptible power supply (316).

7. The electrolysis plant as claimed in claim 6, wherein said uninterruptible power supply (316) also backs up at least one of the set of electrolyser modules (307, 308, 309, 310) .

8. Method for operating an electrolysis plant (300) with enhanced fault ride through capability which comprises a transformer system (301) comprising an autotransformer (302) having a primary side connected to an AC power grid (303) via a point of connection (304) and a secondary side with multiple taps (305), a rectifier system (306), and a set of electrolyser modules (307, 308, 309, 310), wherein the rectifier system (306) is connected to receive transformed AC power from the transformer system (301) and to provide DC power to the set of electrolyser modules (307, 308, 309, 310); the method comprising
selecting (402) one of the taps and selectively establishing (403) a corresponding autotransformer secondary side electrical tap connection through a power electronic circuit of an on-load tap-changer OLTC.

9. The method as claimed in claim 8, further comprising
sensing (404), using a voltage sensor device, a voltage signal corresponding to the voltage at the point of connection;
receiving (405), by an OLTC controller connected to the voltage sensor device and configured to control the OLTC, the voltage signal;
determining (406) which one of the taps to select depending on a level of the voltage signal; and
switching (407) to the selected tap and establishing (403) the corresponding electrical tap connection.

10. The method as claimed in claim 9, further comprising
determining (408), by the OLTC controller, a change of the level of the voltage sensor signal per unit of time;
determining (409) a time instant at which the change stops;
determining (410) the level of the voltage sensor signal at said time instant; and wherein the step of determining (406) which one of the taps to select is carried out depending on said level of the voltage sensor signal.

11. The method as claimed in claim 9 or claim 10, wherein the step of switching (407) to the selected tap comprises switching directly to the selected tap.
